# EUROPÄISCHE PATENTSCHRIFT

(11) **EP 1 241 240 B1**
(45) Veröffentlichungstag und Bekanntmachung des Hinweises auf die Patenterteilung: **26.06.2013**
(21) Anmeldenummer: 02005581.0
(22) Anmeldetag: 12.03.2002
(51) Int. Cl.: C09J 7/04, D06N 7/00, C09J 7/02

(54) **Trägermaterial auf Vliesbasis insbesondere für ein Klebeband mit verbesserter Handeinreissbarkeit**
Non-woven carrier material for an adhesive tape with improved hand tearing property
Matériau de support non-tissé pour ruban adhésif comprenant une déchirabilité améliorée

(30) Priorität: 15.03.2001 DE 10112375
(43) Veröffentlichungstag der Anmeldung: 18.09.2002
(73) Patentinhaber: TESA SE, 20253 Hamburg (DE)
(72) Erfinder: Külper, Klaus, 25421 Pinneberg (DE); Lange, Frank, 20251 Hamburg (DE); Overkamp, André, 48599 Gronau-Epe (DE)

(56) Entgegenhaltungen:
- WO-A-00/20201
- DE-A- 19 923 399
- US-A- 2 750 314

## Beschreibung

Die Erfindung betrifft ein Trägermaterial auf Vliesbasis insbesondere für ein Klebeband, das sich durch eine verbesserte Handeinreißbarkeit auszeichnet.

Klebebänder mit einem Trägermaterial aus Gewebe und Gewirken sind seit Jahrzehnten sowohl in medizinischen Anwendungen, als Universalklebebänder als auch für spezielle technische Anwendungen im Einsatz. Geschätzt wird hier insbesondere neben dem textilen Habitus und Charakter, den hohen Reißfestigkeiten und Flexibilitäten die an sich überraschende Eigenschaft der manuellen Ein- und Durchreißbarkeit des Klebebandes in Querrichtung, die bei geeigneter Wahl des Garnmaterials, der Garnstärke sowie der Gewebekonstruktion erzielt wird. Sowohl in industriellen Produktionsprozessen wie zum Beispiel bei der Wicklung von Kfz-Kabelbäumen als auch in Arztpraxen und Kliniken sowie auch in Konsumeranwendungen wie Basteln ist diese Eigenschaft des manuellen Ablängens in beliebigen Abschnittslängen von Vorteil, da dadurch auf Hilfsmittel wie Scheren, Messer, Dispenser etc. verzichtet werden kann, die nicht nur nicht immer verfügbar sind, sondern deren zwingender Einsatz gerade auch in Arbeitsabläufen an industriellen Fertigungslinien störend sein kann.

Da Gewebe (woven fabric) bedingt durch die langsame und aufwendige Herstelltechnologie des Webens kostenträchtig sind und zukünftig auch bleiben werden, wurde in den letzten Jahren verstärkt nach alternativen Trägern für Klebebänder und Pflaster gesucht - Vliesstoffe (nonwoven fabric) aus Filamenten oder Fasern endlicher Länge bieten sich dafür an und haben besonders in medizinischen Anwendungen schon erheblichen Einsatz gefunden. Auch als technische Klebebänder beispielsweise für die Wicklung von Kabelbäumen oder elektrischen Spulen und Transformatoren sind Vliesklebebänder bereits im Einsatz. Vliesstoffe können nicht nur in großem Umfang als Gewebeersatz fungieren, sondern lassen sich vielfach Maß schneidern und bieten dann zusätzliche Eigenschaften, die mit Gewebe nicht zu erreichen sind.

Die Verwendung von Vliesstoffen ist mit einem erheblichen Kostenvorteil gegenüber gewebten oder gewirkten Trägern verbunden, da die modernen Herstellprozesse für Spinn- oder Stapelfaservliesstoffe um Größenordnungen produktiver sind und die genutzten Herstelltechnologien von beispielsweise Spinnvliesen, mittels Wasserstrahl verfestigten oder thermisch gebundenen Stapelfaservliesen noch große Prozeßoptimierungspotentiale aufweisen.

Generell weisen Vliesstoffe jedoch gegenüber den Geweben ein ungünstigeres Verhältnis von physikalischen Festigkeiten (Höchstzugkraft, Delaminationsfestigkeit, Ein- und Weiterreißfestigkeit) zu textilen Eigenschaften (wie Griff, Flauschigkeit, Flexibilität, Weichheit etc.) auf.

Sind Vliesstoffe weich und flauschig wie Filtervliese und lassen sich leicht per Hand ablängen, sind sie jedoch für Klebebandanwendungen ungeeignet. Die geringen Höchstzugkräfte in Maschinenrichtung (MD) lassen weder eine sichere Verarbeitung von Rolle auf Rolle bei der Herstellung zu, noch kann der Endanwender derartige Klebebänder für zum Beispiel Bandagen und Fixierungen mit höheren Zugbelastungen einsetzen. Die geringe Verbundfestigkeit der Vliesstoffe läßt Probleme wie ein Delaminieren des Trägers bei dem Abwickeln des Klebebandes von der Rolle erwarten; auch wird das Klebeband in seinem Klebverhalten zumindest erheblich eingeschränkt, wenn lose oder nur leicht eingebundene Fasern oder Filamente aus der Vliesoberfläche beim Abwickeln von der Rolle herausgerissen werden und auf der Kleberschicht verbleiben; schlußendlich wird bei derartigen Vliesstoffen durch das manuelle Ablängen im Allgemeinen eine optisch wenig ansprechende, ausgefranste Rißkante erzielt.

Umgekehrt lassen sich durch hinreichend intensive Verfestigung von Vliesstoffen feste und kompakte Träger erzeugen, die jedoch meist merklich härter, steifer und brettiger als Gewebe ausfallen und die ein leichtes manuelles Ablängen ohne Hilfsmittel nicht zulassen. Auch würde die intensive Vliesverfestigung weitere Eigenschaftsvorteile der flauschigen Vliesstoffe gegenüber Geweben wie beispielsweise den weichen und angenehmen Griff sowie das ausgeprägte Geräuschdämpfungsvermögen reduzieren - Eigenschaften, weswegen besonders in der Automobilindustrie Vliesklebebänder gegenüber Gewebeklebebändern in etlichen Anwendungsbereichen wie beispielsweise Bandagierung von Kabelsträngen bevorzugt werden.

Gerade die Möglichkeit, ein textiles Klebeband ohne zusätzliche Hilfsmittel wie Schere, Messer, Cutter oder Dispenser per Hand quer zur Laufrichtung ein- und durchreißen zu können, stellt jedoch eine wichtige und kritische Anforderung dar: für ein Universalklebeband, das jeder Zeit nutzbar sein muß, auch wenn gerade keine Hilfsmittel zur Hand sind; ebenso für ein technisches Klebeband bei der Wickelung und Bandagierung von Elektrokabeln zu kompletten Kabelsträngen unter Akkordbedingungen, wo die Notwendigkeit zur Verwendung einer Schere oder dergleichen die Produktivität verringern würde, da es die optimalen Arbeitsabläufe stört.

An diese Handeinreißbarkeit werden zwei wesentliche Anforderungen gestellt, deren Gewichtung gegeneinander unterschiedlich ausfallen kann je nach Anwendung: als Universalklebeband einerseits oder andererseits als Spezialklebeband für technische Nutzung - für industrielle Anwendungen wie zum Beispiel Kabelbandagierung ist
- ein leichtes und über Stunden immer wieder durchzuführendes Ablängen ohne Ermüdung oder Überanstrengung der Mitarbeiter erwünscht; insbesondere für Konsumerklebebänder hat dagegen
- eine ansprechende Rißkante einen hohen Stellenwert, möglichst mit gerader Rißlinie, rechtwinklig zur Klebebandkante sowie mit nicht übermäßig ausgefransten Rändern.

Beide Anforderungen werden weitestgehend durch einen speziell verfestigten Vliesstoff, das sogenannte Nähwirkvlies "Maliwatt' oder vergleichbare Ausführungsformen, erfüllt - durch ausgeprägte Querorientierung der Stapelfasern wird ein günstiges Rißverhalten in Querrichtung erreicht und durch das Übernähen mit separat zugeführten Nähfäden in Maschinenrichtung (MD - machine direction) werden ausreichende Fasereinbindung und Zugfestigkeiten gewährleistet. Klebebänder mit einem derartigen Trägermaterial sind unter EP 0 668 336 A1 sowie DE 44 42 092 C1 beschrieben und finden insbesondere Einsatz bei der Herstellung von Kfz-Kabelbäumen und als Universalklebeband.

Jedoch erfordern die für eine Klebebandanwendung notwendigen Trägereigenschaften eine Vielzahl an Nähten dicht nebeneinander (hohe Feinheit) sowie eine geringe Stichlänge (Abstand der Nadeleinstiche beim Nähprozeß) - beides bedingt ein sehr aufwendiges Herstellverfahren, welches mit ca. 1 bis 2 m/min langsam und somit kostenintensiv ist - bedingt durch die Vielzahl an bewegten mechanischen Teilen bei derartigen "Nähmaschinen" sind merkliche Steigerungen der Herstellgeschwindigkeit nicht zu erwarten.

Andere Vliesstoffe, die manuell ablängbar sind, aber bei Klebebandverwendung zur Delamination und zu Faserausrissen aus der Oberfläche neigen, lassen sich zwar grundsätzlich für Klebebänder einsetzen, wenn das entsprechende Klebeband mit einem Hilfsträger wie beispielsweise silikonisierten Trennpapieren oder -folien eingedeckt wird. Dieser Lösungsweg wird jedoch nur in Ausnahmefällen für Klebebandrollenware genutzt, da der Herstellprozeß aufwendiger wird, der Hilfsträger einen zusätzlichen Kostenblock darstellt, sich für den Endanwender das Handling des Klebebandes schwieriger gestaltet und erhebliche Abfallmengen an Trennpapier/-folie zu entsorgen sind. Des weiteren gelten insbesondere in Teilen der Elektronik- und der Automobilindustrie strikte Verwendungsverbote für silikonhaltige Produkte.

Bei Verwendung von naßgelegten Vliesstoffen lassen sich Klebebänder mit akzeptablen Handeinreißbarkeiten in Querrichtung erzielen, da Naßvliese aus Kurzfasern hergestellt werden, meist aus überwiegend Zellulosefasern. Während Zellulosefasern über Wasserstoffbrücken bereits merkliche Vliesverbundfestigkeiten ergeben, sind bei Einsatz von Synthesefasern zusätzliche Verfestigungstechniken notwendig - überwiegend wird durch Einsatz von Dispersionen als chemische Binder die notwendige Faser-Faser-Bindung erzielt; neuerdings werden auch verstärkt Schmelzfasern oder Bikomponenten-Fasern zugemischt, die bei einer entsprechenden Thermobehandlung ebenfalls zu einer Verfestigung des Vliesverbundes führen. Bedingt durch den Herstellprozeß werden als Naßvliesstoffe jedoch überwiegend papierähnliche Trägermaterialien erhalten, die den gewünschten typischen "textilen" Habitus vermissen lassen und beispielsweise in der Kabelsatzfertigung bei der Spiralwicklung zu Falten- und Tütenbildungen führen, da sie nicht genügend dehnfähig und anschmiegsam sind. Des weiteren bedingt der für das Herstellverfahren vielfach notwendige hohe Anteil an Viskosefasern eine Trägerschwächung in Hinblick auf Temperatur- und Alterungsbeständigkeit, die den Einsatz als technisches Klebeband stark einschränkt.

In EP 0 821 044 A1 wird ein Verpackungsklebeband mit guter Einreißbarkeit in Querrichtung beschrieben. Hierzu wird ein Spinnvlies mit in MD ausgerichteten Filamenten mit einem zweiten Spinnvlies mit in CD (CD - cross direction) ausgerichteten Filamenten zusammenlaminiert. Die Feinheit der Filamente ist dabei kleiner oder gleich 1 Denier [Denier beschreibt das Gewicht in g pro 9000 m].

Das Laminieren geschieht vorzugsweise durch Thermoprägung, wobei die Prägestrukturen durch Prägelinien in CD-Richtung die Quereinreißbarkeit verbessern. Anstelle des zweiten Spinnvlieses sind auch andere querorientierte Flächengebilde einsetzbar. Die beschriebene Thermoprägung sowie eine zusätzliche flächige Beschichtung der Oberseite mit einer Kunststoffschicht gestalten die Herstellung nicht nur aufwendig, sondern verändern die Optik und Haptik des Trägers von einem Textil in Richtung auf eine Folie.

Um dennoch "normale" Vliesstoffe wie trocken gelegte Stapelfaservliese für Klebebandanwendungen nutzen zu können, wird in der US 5,631,073 A1 eine spezifische Verfestigungsmethode beschrieben, bei der nicht nur die mechanischen Festigkeitseigenschaften verbessert werden, sondern auch gute Handeinreißbarkeiten in Querrichtung erreicht werden. Es werden Vliesstoffe, bestehend aus Stapelfasern und Bindefasern, beschrieben, die in einem ersten Schritt unter Druck und Temperatur geprägt werden, um dann anschließend durch Imprägnierung mittels Bindemittel und/oder Einsatz von Wasserstrahl- oder Nadeltechnik noch weiter verfestigt werden. Durch die Prägung werden Linienstrukturen in Querrichtung erzeugt, die für die Handeinreißbarkeit als wesentlich angesehen werden. Durch derartige Thermokalanderung wird der Vliesträger jedoch merklich verdichtet und an den geprägten Stellen "verschweißt", so daß der Träger härter wird und seine textilen Eigenschaften sich verschlechtern. Auch ist der komplette, erfindungsgemäße Verfahrensprozeß bis zum fertigen Trägervlies extrem aufwendig und nur für spezielle Anwendungen gerechtfertigt - so finden derartige Klebebänder bisher im Wesentlichen Einsatz im medizinischen Bereich, könnten jedoch prinzipiell auch für technische Anforderungen und für Universalklebebänder genutzt werden.

Ähnlich aufwendig und nur in Sonderfällen gerechtfertigt ist die Herstellung eines handeinreißbaren Klebebandes für medizinische Anwendungen, wie es in WO 00/20201 A1 beschrieben wird. Der Träger besteht aus einem Laminat aus zwei oder drei separaten Schichten, wovon eine ein Gelege, die eine oder die beiden anderen Lagen Vliesstoffe sind. Der Vliesstoff wird dafür zuerst bevorzugt gemäß WO 93/15245 A1 thermisch geprägt, um bereits gute Quereinreißbarkeiten zu erzielen. Das erfindungsgemäße Laminat wird anschließend durch Thermolaminierung von Vliesstoff und Gelege und zusätzlichem Beschichten mit chemischem Binder hergestellt.

Eine eher graduelle Verbesserung der Handeinreißbarkeit läßt sich auch erzielen, indem "normale" kardierte Stapelfaservliesstoffe unter Zuhilfenahme von chemischen Bindemitteln oder Schmelz- beziehungsweise Bindefasern verfestigt werden - derartige Klebebänder werden beschrieben unter DE 199 23 399 A1 und DE 199 37 446 A1. In beiden Fällen sind die zusätzlichen Bindesysteme homogen verteilt im gesamten Faserverbund zu finden. Werden weiche, elastische Bindesysteme eingesetzt, bleiben die textilen Eigenschaften wie Weichheit, Griff etc. erhalten, die Handeinreißbarkeit verschlechtert sich jedoch eher noch; wählt man dagegen harte, spröde Bindesysteme, verbessern sich zwar die mechanischen Festigkeiten sowie die Handeinreißbarkeit, der Vliesstoff wird jedoch steif und brettig - die gewünschten textilen Eigenschaften für Klebebandanwendungen werden negativ beeinflußt und beim Einsatz für Kabelbandagierung besteht die Gefahr von unerwünschten Faltenbildungen bei Spiralwicklungen.

Nach US 4,772,499 A1 läßt sich eine Verbesserung der Querhandeinreißbarkeit bei einem Vliesstoff erzielen, indem dieser mit einer Vielzahl von getrennten, bevorzugt parallel in Querrichtung verlaufenden Streifen oder Blöcken versehen wird, die erzeugt werden durch eine Tiefenimprägnierung in der gesamten Schichtdicke des Vliesstoffes mit einem Bindemittel. Die bindemittelfreien Bereiche zwischen diesen imprägnierten Querstreifen sind in der Größenordnung von 1/16 inch [= 1/16 * 25,4 mm = 1,5875 mm] und schmaler als die mittels Binder verfestigten Bereiche, was in einer Erhöhung der Zugfestigkeiten in MD resultiert. Das erfindungsgemäße Verhältnis zwischen Streifenbreite und Zwischenraum liegt bei größer 1, so daß der überwiegende Teil des Vliesstoffes mittels Bindemittel imprägniert und verfestigt ist. Die massive Konzentration des chemischen Binders in den Streifen in der vollen Schichtdicke sowie die nur schmalen nichtimprägnierten Zwischenräume dazwischen verbessern zwar die Handeinreißbarkeit in Querrichtung und lassen eine gerade Rißkante zwischen den beiden gebundenen Streifen erwarten, ergeben jedoch einen verhärteten Träger, der für Klebebandanwendungen, bei denen es auf textile Eigenschaften wie Griff, Weichheit und Anschmiegsamkeit ankommt, nicht empfehlenswert ist.

Bekannt ist ebenfalls, daß sich durch eine flächige ein- oder beidseitige Beschichtung von Vliesstoffen mit einer Kunststoffschicht die Handeinreißbarkeit positiv beeinflussen läßt, sofern diese Beschichtung nicht zu weich und elastisch gewählt wurde. Verbunde, die durch Direktextrusion von geeigneten Polymeren wie beispielsweise Polyethylen oder Polypropylen auf textile Träger wie Gewebe, Gewirke sowie Vliesstoffe hergestellt werden, weisen leichtere Einreißbarkeiten als die reinen textilen Träger auf, wenn der Polymerfilm eine gewisse Härte und Sprödigkeit mitbringt - leider wird dadurch aber auch die für das Klebeband gewünschte Flexibilität und Anschmiegsamkeit verschlechtert und im Falle der gängigen PE-Beschichtung die Temperatur- und Witterungsbeständigkeit des Klebebandes eingeschränkt.

Ähnliche Verbesserungen der Handeinreißbarkeit lassen sich durch ein- oder beidseitige Beschichtung mit Kunststoffdispersionen oder -pasten als auch durch Imprägnieren von Vliesträgern erzielen - beispielsweise beschrieben in DE 44 42 092 C1-, wobei die Nutzung von geeigneten Kunststoffdispersionen auf Basis Polyacrylate, Polyurethane u.ä. gegenüber den genannten Polyethylen- und Polypropylenbeschichtungen Vorteile in der Temperatur- und Witterungsbeständigkeit ergibt.

Jedoch erfordern alle diese Beschichtungen von Vliesstoffen einen zusätzlichen Prozeßschritt, der normalerweise nicht online bei der Vliesherstellung vorgenommen werden kann. Derartige Beschichtungen bedeuten eine merkliche Verteuerung des Endproduktes und mindern den textilen Charakter des Vliesstoffes.

Ansätze, die Handeinreißbarkeit in Querrichtung bei Vliesstoffen merklich zu verbessern, folgen bis dato dem Konzept, "Leitstrukturen" in dem Träger in CD-Richtung einzubauen, an denen das Weiterreißen sich orientiert und gelenkt wird. In WO 00/20201 A1 sind dies die CD-Fäden des Geleges, in US 4,772,499 A1 die durch partielle Imprägnierung erzeugten parallelen Streifen in CD-Richtung, in US 5,631,073 A1 sowie EP 0 821 044 A1 die Prägungen mit bevorzugter Linienstruktur in Querrichtung. An diesen Leitstrukturen entlang orientiert sich die Rißfortpflanzung, so daß bei geeigneter Ausprägung nur gering oder nicht ausgefranste Ränder erzeugt werden.

Bekannte textile Trägermaterialien mit guten manuellen Querein- und -weiterreißbarkeiten wie Gewebe, Gewirke, Maliwatt-Nähwirkvliesstoffe etc. sind dagegen gekennzeichnet durch eine Vielzahl von dicht aneinander liegenden Fäden in MD; durch den Web-, Wirk- und Nähwirkprozeß sind diese Fadenscharen in dem Flächengebilde weitgehend lokal fixiert und lassen sich nur unter merklicher Kraftanwendung in ihrer Position verschieben. Sind die Garnstärken der Kettfäden beziehungsweise Nähfäden in MD derart gewählt, daß bei ruckartiger Belastung, wie sie beim Durchreißen auftritt, eher das Reißen des Fadens auftritt als ein Verschieben im Flächengebilde, ist die Eigenschaft der Handeinreißbarkeit realisiert - sind dagegen die Fäden zu dick oder aber die geometrische Fixierung zu schwach, werden bei dem Durchreißvorgang die Einzelfäden zu Fadenbüscheln zusammengeschoben und stellen als Bündel von Einzelfäden dem Durchreißvorgang einen zu hohen Widerstand entgegen, daß nur ein Verstrecken, Verformen und Überdehnen des Trägermaterials, nicht jedoch ein weitgehend gradliniges Durchreißen erfolgt - ein Teil der eingebrachten Energie geht dabei in der Verformung und Verzerrung des Flächengebildes verloren und steht nicht für das Durchreißen zur Verfügung.

Deshalb ist es Aufgabenstellung für die Entwicklung, die Nachteile des Stands der Technik zu vermeiden und auf Basis eines Vliesstoffes insbesondere aus Filamenten oder Stapelfasern ein neues textiles Trägermaterial zu entwickeln, welches mit modernen, produktiven Vliesherstell- und -finishingtechnologien gefertigt werden kann und welches neben dem weitgehenden Erhalt des textilen Charakters die für Klebebänder wichtige Eigenschaft der manuellen Einreißbarkeit in Querrichtung aufweist.

Gelöst wird diese Aufgabe durch ein Trägermaterial, wie es im Hauptanspruch niedergelegt ist. Gegenstand der Unteransprüche sind dabei vorteilhafte Weiterbildungen des Trägermaterials sowie bevorzugte Anwendungen des erfindungsgemäßen Trägermaterials.

Demgemäß betrifft die Erfindung ein Trägermaterial auf Vliesbasis insbesondere für ein Klebeband, wobei auf der Oberfläche eines bandförmigen Trägers auf Vliesbasis ein- oder beidseitig zumindest ein Streifen auf Polymerbasis aufgebracht ist, dadurch gekennzeichnet, dass Trägermaterial auf Vliesbasis insbesondere für ein Klebeband, wobei auf der Oberfläche eines bandförmigen Trägers auf Vliesbasis ein- oder beidseitig zumindest ein Streifen auf Polymerbasis aufgebracht ist,
dadurch gekennzeichnet, dass
der oder die Streifen aus schmalen Linien oder/und aus kettenförmig aneinander gereihten Geometrien wie beispielsweise Rauten, Ellipsen und/oder Kreisen bestehen, wobei als Polymerbasis Bindemittel, Druckfarben, Farben, Lacke in Form von Dispersionen oder Pasten, gelöst in organischen Lösemitteln, als Hotmelts oder auch als reaktive Systeme eingesetzt werden.

Auch für den Fachmann zeigte sich überraschenderweise, daß eine Imitierung der beschriebenen Kettfäden mit bevorzugter Orientierung in Maschinenrichtung bei Standardvliesstoffen durch das erfindungsgemäße Aufbringen von Streifen, die an sich nicht oder nur schwer handeinreißbar sind, zu einer deutlichen Verbesserung der Querein- und -weiterreißbarkeit per Hand führt und zusätzlich noch die mechanischen Zugfestigkeiten in MD-Richtung verbessert.

Auch lassen sich bei erfindungsgemäßer Ausgestaltung die textilen Eigenschaften wie Griff, Flexibilität, Weichheit etc. in weitem Umfang erhalten, wie dies nach bekannten Verfahren nicht möglich ist.

Es wurde gefunden, daß sich Standardvliesstoffe, die insbesondere aus Stapelfasern hergestellt und mit bekannten Technologien wie Vernadelung, Wasserstrahlverfestigung, Einsatz chemischer Bindemittel, Thermobondierung u.ä. verfestigt sind und ungenügende Ein- und Durchreißbarkeiten per Hand in Querrichtung aufweisen, bezüglich der Handeinreißbarkeit deutlich verbessern lassen, wobei die textilen Eigenschaften im Vergleich zum Ausgangsvliesstoff weitgehend erhalten bleiben. Unerwarteterweise ergab sich, daß dafür im Gegensatz zum beschriebenen Stand der Technik keine Leitstrukturen in Querrichtung im Vliesstoff erzeugt werden müssen.

Mit den Streifen werden die Fadenscharen imitiert, die bei handeinreißbaren Textilien wie Geweben durch die Kettfäden, bei Nähwirkvliesstoffen wie dem Maliwatt durch die Nähfäden eingebracht werden - analog zu derartigen Fadenscharen in MD bewirken auch die aufgedruckten Streifen in Längsrichtung eine Erhöhung der MD-Zugfestigkeit, da zum einen Fasern im Bedruckungsbereich untereinander mehr gebunden werden, zum anderen die Streifen selbst ein Element zur Festigkeitserhöhung darstellen.

In einer vorteilhaften Ausführungsform der Erfindung sind auf dem Träger eine Vielzahl Streifen aufgebracht, die darüber hinaus noch parallel angeordnet sein können.

Des weiteren hat es sich als vorteilhaft erwiesen, wenn die Streifen im wesentlichen in Maschinenrichtung aufgebracht sind. Dann ist es besonders vorteilhaft, die Streifen vollständig in Maschinenrichtung zu orientieren.

Die Streifen können aus schmalen Linien oder/und aus kettenförmig aneinander gereihten Geometrien wie beispielsweise Rauten, Ellipsen und/oder Kreisen bestehen.

Es ist ebenfalls bevorzugt, wenn die Streifen durchgängig oder durch Zwischenräume regelmäßig oder statistisch unterbrochen sind, wobei die Abstände zwischen den Elementen kleiner als die Längen der Streifenelemente sind.

Neben den bisher beschriebenen dünnen Streifen in Längsrichtung lassen sich weitere Geometrien zur Erzielung von verbesserten Handeinreißbarkeiten in Querrichtung einsetzen - im Sinne der Erfindung sind geeignete Geometrien wesentlich durch eine ausgeprägte Vorzugsrichtung MD gekennzeichnet, die bei Längsstreifen in reiner Form vorliegt.

Anstelle von durchgehenden Streifen sind auch teilweise unterbrochene Streifen sowie Strukturen möglich, die durch kettenförmige Aneinanderreihung von Gebilden wie beispielsweise Rauten, Kreisen, Ellipsen entstehen. Je größer die Flächenbedeckung und die Basisflächen dieser Grundelemente sind und je mehr die einzelnen Elemente direkte Verbindung miteinander haben, desto stärker wird der Vliesstoff verfestigt - die Zugfestigkeit steigt an, die Neigung zum Ausriß von einzelnen Fasern aus der Oberfläche bei Klebebandanwendungen wird reduziert, jedoch werden diese Verbesserungen durch eine zunehmende Verhärtung erkauft, so daß je nach konkreter Anforderung über die Geometrie, Flächenbedeckung und Eindringtiefe der Bindemittelbedruckung die optimale Balance der wichtigen Trägereigenschaften vom Fachmann ohne jegliche Probleme oder jeglichen Aufwand durch im Rahmen des fachmännischen Könnens liegende Kenntnisse eingestellt werden kann.

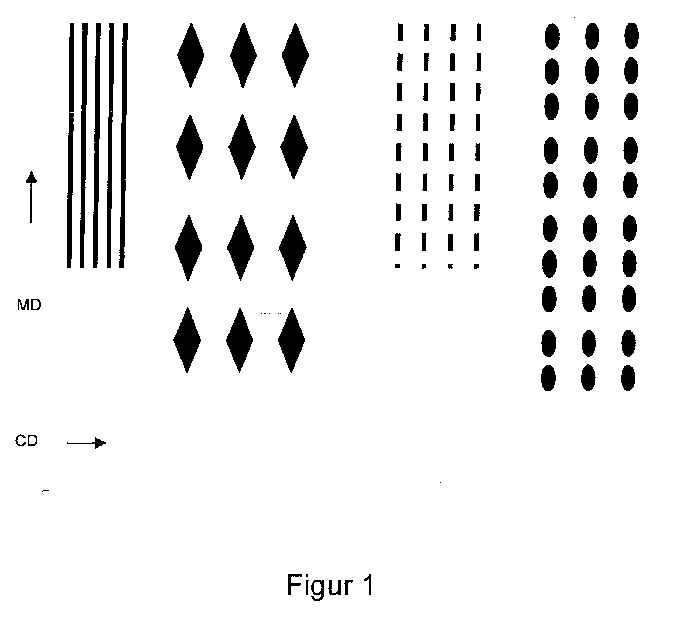

Typische Beispiele für erfindungsgemäße Geometrien mit reiner Längsorientierung sind unter Figur 1 zu finden, ohne daß damit ein Anspruch auf Vollständigkeit im Sinne der Erfindung erhoben wird.

In einer weiteren bevorzugten Ausführungsform sind Querstreifen auf dem Träger aufgebracht, die im wesentlichen rechtwinklig zu den Streifen angeordnet sind, so daß auch Geometrien genutzt werden können, die neben der dominierenden Ausrichtung in Längsrichtung auch geringe Anteile in Quer- oder Schrägrichtung (bezogen auf MD) aufweisen. Da für die Verbesserung der Handeinreißbarkeiten die bekannten Leitstrukturen in Querrichtung gemäß Stand der Technik nicht notwendig sind, können die Streifen etc. in CD-Richtung stark vermindert in Menge und Stärke gegenüber den MD-Strukturen gewählt werden. Dadurch läßt sich nicht nur merklich Bindemittel einsparen, auch der weitgehende Erhalt der textilen Eigenschaften läßt sich so realisieren.

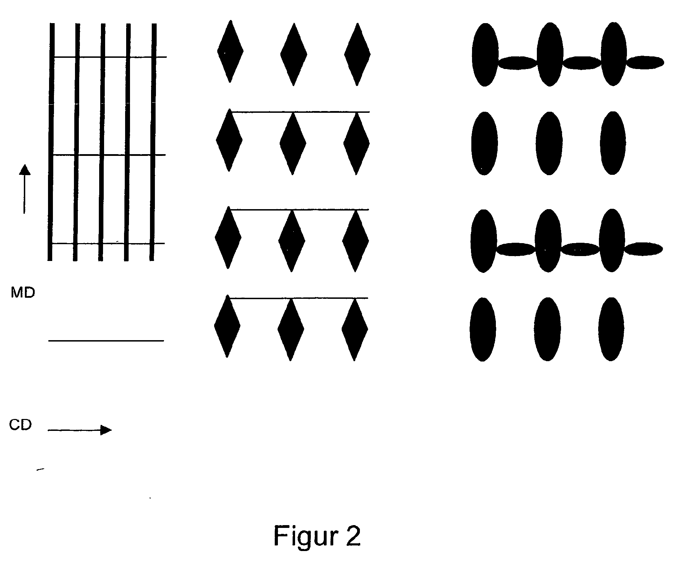

Typische Beispiele für derartige erfindungsgemäße Geometrien sind unter Figur 2 zu finden.

Durch beispielsweise wenige und dünne Streifen in Querrichtung wird die Handeinreißbarkeit nicht signifikant gegenüber einem Vliesstoff mit reinen MD-Streifen weiter verbessert, jedoch wird durch diese CD-Streifen eine Stabilisierung des Vliesstoffes in Querrichtung erreicht, die bei der Herstellung und Verwendung von Klebebändern wünschenswert, jedoch nicht zwingend notwendig ist.

Vorzugsweise werden die erfindungsgemäßen Streifen durch Drucktechnologien wie Rastertief- oder Siebdruck, durch Sprühtechniken wie Ink-Jet, partielles Imprägnieren, druckloses Aufbringen aus einem Gießkopf, Düsenstreifenstrichbeschichtung oder im Rakelauftragsverfahren aufgebracht.

Bei dem Rakelauftrag ist entweder eine geeignete Schablone für derartige Geometrien zu verwenden, oder aber es wird ein Basisträgermaterial eingesetzt, das bereits Rillen oder Riefen in Längsrichtung aufweist.

Diese können durch Prägung erzeugt werden oder bei der Wasserstrahlverfestigung als normalerweise unerwünschter Effekt der letzten Düsenleiste auftreten. Bei entsprechendem Wasserdruck hinterlassen die letzten Wasserstrahlen auf der laufenden Vliesstoffbahn linienförmige Vertiefungen, die im Rakelauftragsverfahren mit dem Bindemittel oder der Druckfarbe gefüllt werden können. Geeignete Linien in Längsrichtung können nach den Grundgedanken der Erfindung nicht nur durch Bedruckung, sondern auch über Prägung mittels Temperatur und/oder Druck im Vliesträger erzeugt werden.

In der bevorzugten Form wird eine Vielzahl von parallelen und/oder schmalen Streifen mit Druckverfahren wie Siebdruck oder Rastertiefdruck einseitig auf den Vliesstoff aufgebracht, da sich die notwendigen Geometrien und Auftragsmengen hiermit am besten realisieren lassen. Auch liegen mit diesen Technologien umfangreiche Erfahrung in der Bedruckung von Textilien vor.

Mit Flexodruck können auch die gewünschten Geometrien aufgedruckt werden, für eine ausreichende Faserverfestigung ist jedoch eine höhere Auftragsmenge an Bindemittel erwünscht, als dies mit dieser Hochdruck-Technik normalerweise möglich ist.

Die Anzahl und die Breite der Streifen richten sich nach den angestrebten Eigenschaften des fertigen Vliesstoffes, müssen aber auch die Möglichkeiten der gewählten Applikationstechniken berücksichtigen.

Bei den Drucktechnologien wie Sieb- und Rastertiefdruck lassen sich bei geeigneter Auswahl der "Druckfarbe" feinste Streifen von ca. 0,1 bis hin zu 6 mm Breite drucken, wobei bevorzugt Streifenbreiten von 0,5 bis 3 mm zu wählen sind.

Bei Nutzung von Beschichtungstechnologien wie Gießkopf, Rakelauftrag etc. ist die Streifenbreite nach unten hin durch die gewählten Technologien beschränkt.

Um die gewünschten textilen Eigenschaften weitgehend unverändert zu lassen, sind in einer bevorzugten Ausführungsform die Zwischenräume zwischen den aufgedruckten Streifen größer als die Streifenbreite, so daß die Flächenbedeckung unter 50% liegt. Mit anderen Worten, die Summe der Fläche aller Streifen macht weniger als 50% der Gesamtfläche des Trägers aus, insbesondere 20 bis 40%.

Im Gegensatz zu US 4,772,499 A1, wo eine vollständige Durchimprägnierung des Vliesstoffes und eine Flächenbedeckung von mehr als 50%, in den Beispielen sogar real von größer 66%, gefordert wird, läßt sich bei erfindungsgemäßer Herstellung von einreißbaren Vliesstoffen die notwendige Menge an Binder deutlich reduzieren.

Zum einen reichen Flächenbedeckungen von 5 bis 50% aus, wobei die besten Ergebnisse bei 20 bis 40% erzielt werden.

Zum anderen wird in Hinblick auf den geforderten Erhalt der textilen Eigenschaften eine nicht-vollständige Durchimprägnierung angestrebt; im Falle von gut vorverfestigten Wasserstrahlvliesstoffen werden die besten Ergebnisse erzielt, wenn das Bindemittel überwiegend an der Oberfläche des Basisvliesstoffes lokalisiert ist und die Bindemittelmengen im Dickenprofil des Vliesstoffes von oben nach unten stark abnehmen.

Die gedruckten Streifen sind analog den Kettfäden in Geweben oder den Nähfäden bei Nähwirkvliesen örtlich fixiert und erfüllen somit eine wesentliche Anforderung, um gute Handeinreißbarkeiten einzustellen.

Weiter erwünscht ist eine ausreichende Dichte der Streifen, wobei eine Vielzahl an feinen Streifen bessere Ergebnisse ergibt als weniger, aber dafür dickere Streifen; in letzteren Fällen wird die Rißkante ungleichmäßiger, bei sehr weiten Abständen besteht sogar die Gefahr, daß die Handeinreißbarkeit kaum verbessert sowie daß die Rißfortpflanzung von der Quer- in die Längsrichtung umgeleitet wird.

Als Ausgangsmaterial können unterschiedlichste Vliesstoffe dienen. Bevorzugt handelt es sich um Stapelfaservliesstoffe, die aus gängigen Natur- oder Synthesefasern sowie Fasergemischen mit Faserlängen im Bereich von 30 bis 100 mm und/oder Faserfeinheiten von 1 bis 6 dtex hergestellt sind.

Die Faserorientierung kann sich in weiten Bereichen zwischen bevorzugter Längs- oder Querorientierung oder Wirrlage bewegen, wobei eine nicht zu starke Längsorientierung mit einem MD : CD-Verhältnis von 1 : 1 bis 5 : 1 bevorzugt ist, da durch die Streifenbedruckung nur die Zugkräfte in Längs-, nicht aber in Querrichtung verbessert werden. Bei stark ausgeprägter Längsorientierung der Fasern weist der Vliesstoff zu geringe Festigkeiten in Querrichtung auf, die durch die erfindungsgemäße Veredlung nicht ausreichend erhöht werden und deshalb den Einsatz als Klebebandträger aufgrund leichter Überdehnung in Querrichtung problematisch werden lassen.

Für die Vlieslegung und -verfestigung kann auf nahezu alle bekannten, gängigen Techniken zurückgriffen werden. Da bei Einsatz von textilen Klebebändern jedoch der typische textile Charakter erwartet und gefordert wird, nutzt man für die Vliesherstellung bevorzugt kardierte und mittels Wasserstrahltechnologie verwirbelte und verfestigte Vliesstoffe.

Im Vergleich zu anderen bewährten Technologie bietet die Wasserstrahlverfestigung die günstigste Kombination von mechanischen Festigkeiten (Zug- und Delaminationsfestigkeit), Fasereinbindung in der Oberfläche und textilen Eigenschaften wie weicher Griff, Flexibilität etc., so daß derartige Träger für Klebebandanwendungen prädestiniert sind.

Ohne zusätzliche Veredlung eines derartigen Basisträgers läßt sich das geeignete Eigenschaftsprofil jedoch nicht erreichen - zwar kann durch geeignete Faserauswahl in Hinblick auf Typus, Faserlänge und -feinheit, durch unterschiedliche Faserlegung und Verfestigung eine erhebliche Bandbreite an Vliesstoffen erzeugt werden, die jedoch alle nicht die geforderte Kombination von mechanischen Festigkeiten und Faserfixierung bei gleichzeitig textilem Charakter und guter Handeinreißbarkeit in Querrichtung mit ansprechender Rißkante aufweisen. Mit Viskose als Fasermaterial werden sehr flauschige Träger mit verbesserten Handeinreißbarkeiten erhalten, die mechanischen Festigkeiten und die Einbindung der Oberflächenfasern sind dagegen unbefriedigend. Des weiteren würde der Einsatz von Viskosefasern die Verwendung derartiger Vliesstoffe für technische Anwendungen einschränken, da beispielsweise bei Kabelsatzklebebändern höhere Temperatur- und Feuchtigkeitsbeständigkeiten sowie Verrottungsfestigkeit gefordert werden.

Als Polymerbasis werden gemäß einer hervorragenden Ausgestaltung der Erfindung Bindemittel, Druckfarben, Farben, Lacke in Form von Dispersionen oder Pasten, gelöst in organischen Lösemitteln, als Hotmelts oder auch als reaktive Systeme wie beispielsweise strahlenchemisch härtbare Lacke eingesetzt, insbesondere mit Hauptbestandteilen wie Polyacrylate, Polyvinylacetate, Polyurethane, Polyester, styrolhaltige Copolymere.

Die Polymere weisen eine ausreichende Haftung und Affinität zu den jeweiligen Fasern auf.

Des weiteren hat es sich als vorteilhaft herauskristallisiert, wenn die Polymerbasis in der Größenordnung von 1 bis 80 g/m², insbesondere mit 3 bis 20 g/m², auf dem Träger aufgebracht wird, wobei diese Auftragsmengen stark von dem Flächengewicht des eingesetzten Rohvliesstoffes abhängen und sich auf den gesamten Träger mit seiner bedruckten und unbedruckten Fläche beziehen.

Das Bindemittel oder die Druckfarbe sind einerseits der eingesetzten Beschichtungstechnologie anzupassen, zum anderen den Anforderungen seitens des Basisvliesstoffes. Prinzipiell kann auf vielfältige Systeme wie Bindemittel, Farben, Lacke etc. in Form von Dispersionen oder Pasten, gelöst in organischen Lösemitteln, als Hotmelts oder auch als reaktive Systeme wie beispielsweise strahlenchemisch härtbare Lacke zurückgegriffen werden. Hauptbestandteile dieser Bindemittel, die nach Aushärtung einen zusammenhängenden Film bilden, sind Polymere wie beispielsweise Polyacrylate, Polyvinylacetate, Polyurethane, styrolhaltige Copolymere. Daneben können Farbstoffe und -pigmente, Stabilisatoren, Netzmittel, Vernetzer, Alterungsschutzmittel etc. zugegen sein. Das Bindemittel ist den verwendeten Fasern anzupassen, so daß eine gute Benetzung und nach Aushärtung eine dauerhafte Haftung erreicht wird.

Als besonders günstig in Verbindung mit den Drucktechnologien Siebdruck und Rastertiefdruck haben sich Polymerdispersionen erwiesen, wie sie im Bereich von Vliesstoffen als chemische Bindemittel bekannt sind: Gute Faserbenetzung und -bindung können hier als gegeben vorausgesetzt werden, und für alle gängigen Faserstoffe existiert zumindest eine Auswahl von kommerziell verfügbaren Bindedispersionen.

Über die Viskosität der Dispersion läßt sich die Eindringtiefe in den Vliesstoff und damit die zusätzliche Verfestigung steuern - wird eine hochviskose Paste verdruckt, werden die Streifen flächig auf der Oberfläche aufgebracht und nur die Oberflächenfasern gebunden - die Zugfestigkeit erhöht sich nur geringfügig, der ursprüngliche textile Charakter bleibt weitgehend erhalten.

Werden dünnflüssige Dispersionen verdruckt, verbreitern sich zum einen durch den "Löschblatteffekt" die Streifen, und das Polymere sinkt tiefer in den Vliesstoff ein. Dadurch werden mehr Faser-Faser-Bindungen hergestellt und somit sowohl die Zug- als auch die Delaminationsfestigkeit erhöht. Gelingt es, das Polymere wesentlich an den Faser-Faser-Knotenpunkten zu lokalisieren, hält sich die Verhärtung des Vliesstoffes in akzeptablen Grenzen.

Die Aushärtetechnik für das Bindemittel nach dem Auftragen wird durch die Applizierungsform des Bindemittels bestimmt - Dispersionen und Lösungen werden durch Trocknung in konventionellen Aggregaten ausgehärtet, Hotmelts durch einfaches Abkühlen auf Raumtemperatur, strahlenhärtbare Lacke durch Vernetzung mittels UV-Licht oder anderer energiereicher Strahlung.

Wasserstrahlverfestigte Vliesstoffe lassen sich bereits bei der Herstellung vorteilhaft mit wäßrigen Dispersionen kombinieren: Das durch die Verfestigung mittels hochenergetischer Wasserstrahlen schon feuchte Vlies wird nach einer Grobentwässerung über eine Abquetschstation anschließend durch Sieb- oder Rastertiefdruck bedruckt. Über die Viskosität der Dispersion wird die Eindringtiefe und damit der Umfang der dreidimensionalen Verfestigung gesteuert. Die Trocknung sowohl des Vliesstoffes als auch die Aushärtung des Bindemittels erfolgt dann effizient und kostengünstig in einem Schritt zusammen in konventionellen Trocknern.

Vorteilhaft ist die Kombination aus wasserstrahlverfestigtem Vliesstoff und Dispersionsbedruckung auch vor dem Hintergrund, daß durch diese Art der Vliesverfestigungstechnik eine meist bereits ausreichende Delaminationsfestigkeit (Festigkeit in der z-Richtung) erreicht wird, die es erlaubt, den Einsatz an chemischen Bindemitteln zu minimieren und sich überwiegend auf oberflächliches Bedrucken der Streifenstrukturen ohne Durchimprägnierung zu beschränken, was sich für den gewünschten Erhalt der textilen Eigenschaften positiv auswirkt.

In einer weiteren bevorzugten Ausführungsform des Trägermaterials ist zumindest auf einer Seite des bandförmigen Trägers eine selbstklebende Klebemasse aufgebracht.

Das erfindungsgemäße Trägermaterial läßt sich demgemäß hervorragend für die Herstellung eines Klebebands einsetzen, wobei auf der einen Seite des bandförmigen Trägers Streifen aufgebracht sind und auf der anderen Seite, die der Seite gegenüberliegt, auf der der oder die Streifen vorhanden sind, insbesondere vollflächig eine selbstklebende Klebemasse aufgebracht ist.

Besonders vorteilhaft zeigt sich das beschichtete Trägermaterial bei der Verwendung zum Ummanteln von langgestrecktem Gut, wie insbesondere Kabelsätzen, wobei das Trägermaterial in einer spiralförmigen Bewegung um das langgestreckte Gut geführt wird.

Für die Herstellung von Klebebändern werden erfindungsgemäße Vliesstoffe im Verlaufe des weiteren Herstellprozesses in bekannter Weise zumindest einseitig mit Klebstoffen beschichtet und bei Bedarf mit Trennpapier eingedeckt und abgelängt für Stanzlinge oder aber in den gewünschten Abmessungen zu kleinen Rollen geschnitten. Die Beschichtung mit der Klebemasse erfolgt im Normalfall einseitig auf der zur Bedruckung abgewandten Seite, kann aber auch so durchgeführt werden, daß letztendlich die aufgedruckten Bindemittelgeometrien zwischen Vliesstoff und Klebemasse als partielle Zwischenschicht lokalisiert sind.

Als selbstklebende Masse kommt insbesondere eine handelsübliche druckempfindliche Klebmasse auf Acrylat- oder Kautschukbasis zum Einsatz.

Besonders vorteilhaft hat sich als Klebemasse eine solche auf Acrylathotmelt-Basis erwiesen, die einen K-Wert von mindestens 20 aufweist, insbesondere größer 30, erhältlich durch Aufkonzentrieren einer Lösung einer solchen Masse zu einem als Hotmelt verarbeitbaren System.

Das Aufkonzentrieren kann in entsprechend ausgerüsteten Kesseln oder Extrudern stattfinden, insbesondere beim damit einhergehenden Entgasen ist ein Entgasungsextruder bevorzugt.

Eine derartige Klebemasse ist in der deutschen Patentanmeldung DE 43 13 008 A1 dargelegt. Diesen auf diesem Wege hergestellten Acrylatmassen wird in einem Zwischenschritt das Lösungsmittel vollständig entzogen.

Zusätzlich werden dabei weitere leichtflüchtige Bestanteile entfernt. Nach der Beschichtung aus der Schmelze weisen diese Massen nur noch geringe Anteile an flüchtigen Bestandteilen auf. Somit können alle im oben angeführten Patent beanspruchten Monomere/Rezepturen übernommen werden. Ein weiterer Vorteil der im Patent beschriebenen Massen ist darin zu sehen, daß diese einen hohen K-Wert und damit ein hohes Molekulargewicht aufweisen. Dem Fachmann ist bekannt, daß sich Systeme mit höheren Molekulargewichten effizienter vernetzen lassen. Damit sinkt entsprechend der Anteil an flüchtigen Bestandteilen.

Die Lösung der Masse kann 5 bis 80 Gew.-%, insbesondere 30 bis 70 Gew.-% Lösungsmittel enthalten.

Vorzugsweise werden handelsübliche Lösungsmittel eingesetzt, insbesondere niedrig siedende Kohlenwasserstoffe, Ketone, Alkohole und/oder Ester.

Weiter vorzugsweise werden Einschnecken-, Zweischnecken- oder Mehrschneckenextruder mit einer oder insbesondere zwei oder mehreren Entgasungseinheiten eingesetzt.

In der Klebemasse auf Acrylathotmelt-Basis können Benzoinderivate einpolymerisiert sein, so beispielsweise Benzoinacrylat oder Benzoinmethacrylat, Acrylsäure- oder Methacrylsäureester. Derartige Benzoinderivate sind in der EP 0 578 151 A1 beschrieben.

Die Klebemasse auf Acrylathotmelt-Basis kann aber auch chemisch vernetzt sein.

In einer besonders bevorzugten Ausführungsform werden als Selbstklebemassen Copolymerisate aus (Meth)acrylsäure und deren Estern mit 1 bis 25 C-Atomen, Malein-, Fumar- und/oder Itaconsäure und/oder deren Estern, substituierten (Meth)acrylamiden, Maleinsäureanhydrid und anderen Vinylverbindungen, wie Vinylestern, insbesondere Vinylacetat, Vinylalkoholen und/oder Vinylethern eingesetzt.

Der Restlösungsmittel-Gehalt sollte unter 1 Gew.-% betragen.

Ist eine Schwerentflammbarkeit des beschriebenen Klebebands erwünscht, läßt sich diese erzielen, indem dem Träger und/oder der Klebemasse Flammschutzmittel zugesetzt werden. Diese können bromorganische Verbindungen sein, bei Bedarf mit Synergisten wie Antimontrioxid, wobei jedoch in Hinblick auf die Halogenfreiheit des Klebebandes roter Phosphor, phosphororganische, mineralische oder intumeszierende Verbindungen wie Ammoniumpolyphosphat allein oder in Verbindung mit Synergisten bevorzugt Verwendung finden.

Derartige Klebebänder mit erfindungsgemäß herstellten Vliesstoffträgermaterial weisen eine Verbesserung der Handeinreißbarkeit in Querrichtung auf bei gleichzeitiger Erhöhung der Zugfestigkeit in Längsrichtung sowie einer Verbesserung der Fasereinbindung in der Oberfläche, was speziell für Klebebänder wichtig ist, die als Rollenware ohne Trennpapier vertrieben werden.

Da die Handeinreißbarkeit eine subjektive Größe ist, läßt sie sich nur in Grenzen quantifizieren. Wie in WO 00/20201 A1 beschrieben, liegt auch dieser Untersuchung eine Klassifizierung zugrunde, die zwischen Stufen von "1 - sehr schlechte Handeinreißbarkeit, starkes Ausfransen und unsaubere Rißkante" bis Stufen "5 - sehr leichte Handeinreißbarkeit, geringes Ausfransen und gerade Rißkante" unterscheidet. Die Verbesserung der Querein- und -durchreißbarkeit bei Bedruckung mit den beschriebenen Bindemitteln und Geometrien bewegt sich bei 1 bis 4 Stufen, überwiegend bei 2 bis 3 Stufen, und wird subjektiv als ausgeprägt empfunden.

Mit der Meßmethode zur Schenkelweiterreißkraft nach EN ISO 13937-2 "Weiterreißeigenschaften von textilen Flächengebilden" läßt sich eine befriedigende Korrelation zu den subjektiv empfundenen Werten herstellen - dabei ist jedoch zu bedenken, daß sich die Handeinreißbarkeit aus zwei Stufen zusammensetzt, dem direkten Einreißvorgang sowie dem Weiterreißvorgang, der Rißfortpflanzung. Durch obige Meßmethode wird nach definiertem Einschneiden nur die Kraft für das Weiterreißen gemessen. Deshalb ist nur eine grobe Korrelation der physikalischen Meßwerte mit subjektiven Beurteilungen zu erwarten. Eine gute Korrelation wird erhalten, wenn jeweils die Maximalwerte der Kräfte während des Weiterreißvorganges zur Auswertung herangezogen werden.

Deutliche Verbesserungen der Handeinreißbarkeit bewegen sich in der Größenordnung von 3 bis 30 N (Differenz der notwendigen Kraft zum Weiterreißen des Basisvliesstoffes zu der des bedruckten Vliesstoffes), bevorzugt in der Größenordnung von 5 bis 20 N. Dies zeigt die deutlich geringere Kraft, die für das Durchreißen aufgewendet werden muß. Diese Werte beziehen sich auf mittlere Vliesgewichte in der Größenordnung von 50 bis 80 g/m² und müssen für deutlich andere Grammagen entsprechend angepaßt werden.

Einher mit der leichteren Durchreißbarkeit in Querrichtung geht die Verbesserung des optischen Erscheinungsbildes der Rißkante - bei dem Rohvliesstoff werden stark ausgefranste Ränder sowie bei ausgeprägt längsorientierter Faserlegung teilweise von Quer- in Längsrichtung wechselnde Rißbilder erreicht. Mit der erfindungsgemäßen Streifenbedruckung wird durch die Einbindung der Fasern mit dem Bindemittel/der Druckfarbe zum einen das Ausfransen merklich reduziert, zum anderen die gewünschte Querorientierung der Rißfortpflanzung unterstützt.

Als positiver Nebeneffekt erhöht sich die Zugfestigkeit in Längsrichtung und erlaubt damit eine stärkere Beanspruchung oder bei konstanter Anforderung eine Reduzierung des Flächengewichtes des Vliesstoffes. Speziell bei Einsatz von harten Bindemitteln mit Glasübergangstemperaturen T_{G} > 0 °C, insbesondere T_{G} > +20 °C, geht einher mit der Erhöhung der Zugfestigkeit eine Reduzierung der Reißdehnung. Dieses ist sowohl für den Klebebandhersteller als auch für viele Anwender des fertigen Klebebandes ein Vorteil. Die Rohvliesstoffe weisen meist einen flachen Kraft-Dehnungs-Kurvenverlauf auf - bereits bei geringen Belastungen längt sich das Trägermaterial stark und schnürt sich ein. Sowohl bei der Herstellung der Klebebänder als auch bei Anwendungen wie beispielsweise beim Kabelbandagieren führt diese Sensibilität zu Fertigungsproblemen. Durch die Bedruckung mit Längsstreifen verändert sich das Kraft-Dehnungs-Verhalten dergestalt, daß im relevanten Kraftbereich die Dehnung geringer ausfällt, die Kurve steiler verläuft, aber trotzdem die notwendige Dehnfähigkeit von einigen Prozentpunkten noch aufweist. Somit lassen sich sowohl das Abrollen von der Klebebandrolle als auch die eigentliche Verarbeitung wie das Bandagieren von Kabelbäumen so durchführen, daß keine irreversible Einschnürung oder Überstreckung des Klebebandes erfolgt.

Ein weiterer Produktvorteil ist insbesondere bei der Verwendung des Trägermaterials als Klebeband bei der Ummantelung von Kabelbäumen die Verbesserung der Abriebfestigkeit für ein erfindungsgemäßes Klebeband und somit die Erhöhung der Belastbarkeit von mit derartigen Klebebändern gewickelten Kabelbäumen - zum einen werden die Fasern speziell an der Oberfläche stärker eingebunden in den Vliesstoff und stellen damit einer mechanischen Beanspruchung höhere Widerstände entgegen, zum anderen sind die partiellen Kunststoffbeschichtungen auf der Trägeroberfläche durch ihre Filmstruktur günstige Voraussetzungen für höhere Abriebfestigkeiten, insbesondere wenn die Auswahl des Bindemittelpolymeren diese Anforderungen berücksichtigt und beispielsweise der elastische Anteil des Polymers entsprechend gewählt wird.

Das erfindungsgemäße Trägermaterial wird nachfolgend in beispielhafter Ausführung beschrieben, ohne damit die Erfindung in irgendeiner Weise beschränken zu wollen.

### Beispiele

Die folgenden Beschreibungen zeigen beispielhaft für einen Standardvliesträger und eine handelsübliche Binderdispersion die Verbesserungen der Eigenschaften - die im Labor mittels Flachsiebdruck erzielten Ergebnisse sind für einen Fachmann ohne Probleme auf Produktionsverfahren wie rotativen Siebdruck, Tiefdruck u.ä. zu übertragen. Gleiches gilt auch für andere Trägermaterialien, Bindemittel sowie Druck-/Beschichtungsgeometrien. Als Rohvliesstoff wird ein 64 g/m² schweres, wasserstrahlverfestigtes Trägermaterial aus 100% PES-Stapelfasern eingesetzt, wobei die Stapelfasern eine Feinheit von 1,7 dtex und eine mittlere Faserlänge von 40 mm aufweisen. Das Vlies besitzt ein MD : CD-Verhältnis von nahezu 1 : 1 auf.

Die Handeinreißbarkeit in Querrichtung wird mit der Stufe 1 (sehr schlecht) bewertet, nach der Prüfmethode zur Schenkelweiterreißkraft nach EN ISO 13937-2 ergibt sich eine Weiterreißkraft von 20,5 N. Der Faserausriß wird mit einem Testklebeband geprüft; zum Einsatz kam tesaband® 4651, ein Klebeband mit einem oberseitig kunststoffbeschichteten Zellwollgewebe als Träger für hohe Zugbeanspruchungen sowie einer harzmodifizierten, weichen und sehr tackigen Naturkautschukklebemasse, die eine hohe Affinität zu den Stapelfasern aufweist. Die Beurteilung erfolgt nach einer subjektiven Skala beginnend mit der Note 1 "sehr geringer Faserausriß" bis zu einer Note 5 "sehr starker Faserausriß". Für obiges Rohvlies wird die Note 4 vergeben.

### Beispiel 1

Das PES-Vlies wird im Flachsiebdruck mit einer Paste aus einer verdickten Dispersion eines handelsüblichen, modifizierten Polyacrylates mit einem T_{G} von +32 °C und einer Viskosität von η = 2,5 Pasec (gemessen bei 100 sec⁻¹ als Rate sweep; SN 1832 Kegel-Platte) bedruckt. Dazu wird das Flachsieb auf den Vliesstoff gelegt und mit einem Rakel die Paste durch ein speziell destiniertes Metallsieb mit der Meshzahl 80 Streifen/inch durchgedrückt. Die Geometrie für die Bedruckung besteht aus in Längsrichtung verlaufenden, parallelen Streifen der Breite von 1 mm und einem Abstand zwischen den Streifen von 2 mm, d.h. einer Flächenbedeckung von 33%. Bei der gewählten Viskosität wird eine überwiegend oberflächliche Bedruckung erreicht, jedoch kann ein geringfügiges Eindringen des Bindemittel festgestellt werden. Der Beschichtungsauftrag liegt bei 16 g/m².

Die subjektive Beurteilung der Handeinreißbarkeit in Querrichtung ergibt eine Verbesserung um 3 Einheiten mit der Gesamtnote "gut"; die Weiterreißkraft nach EN ISO 13937-2 beträgt 14,8 N. Das Dehnungsverhalten des Vliesträgers ändert sich: Die Reißdehnung nimmt von 49% auf 32% um ca. 1/3 ab. Durch die überwiegend oberflächige Bedruckung werden die Oberflächenfasern des Rohvliesstoffes besser eingebunden - bei der Prüfung der Fasereinbindung wird eine signifikante Reduzierung der Menge an ausgerissenen Fasern gegenüber dem Rohvlies um zwei Noten festgestellt: Nach einseitiger Beschichtung auf der unbedruckten Vliesstoffseite mit einer Standardklebemasse, wie sie beispielsweise im EP 0 937 761 A1 beschrieben wird, ergibt sich ein Klebeband, welches sich zum Umwickeln und Bandagieren von Elektrokabeln zu Kabelbäumen gut eignet - das Dehnungsverhalten mit beim manuellen Wickeln auftretenden Zugkräften läßt ein faltenfreies, spiralförmiges Bandagieren zu, das Ablängen des Klebebandes kann leicht und problemlos per Hand ohne Hilfe eines Messers oder einer Schere erfolgen.

### Beispiel 2

Durchführung wie bei Beispiel 1, jedoch mit einer Siebgeometrie aus Rauten der Breite von ca. 1 mm (CD-Richtung) und einer Länge von ca. 1,5 mm (MD-Richtung), wobei die Rauten in Längsrichtung eine durchgängige Kette bilden und die jeweiligen Rautenspitzen sich partiell überlappen - der Abstand der Rautenketten zueinander beträgt 1 mm. Die Flächenbedeckung beträgt knapp 40%.

Die Querhandeinreißbarkeit wird als "sehr gut" beurteilt - die Weiterreißkraft beträgt 11,6 N. Die Fasereinbindung verbessert sich um 2 bis 3 Noten auf "sehr gut", wohingegen sich der textile Griff leicht gegenüber dem Rohvlies verschlechtert. Die Reißdehnung nimmt auf 27% ab.

Anwendungstechnische Teste eines Klebebandes analog Beispiel 1 ergeben dieselben guten Ergebnisse beim Bandagieren von Elektrokabeln zu Kabelbäumen.

### Beispiel 3

Wie Beispiel 1, jedoch mit einem Siebdessin aus 0,5 mm breiten Streifen in MD-Richtung, wobei der Abstand jeweils 1 mm beträgt. Zusätzlich sind in CD-Richtung Unterstützungsstreifen von 0,3 mm Breite vorhanden, die jeweils einen Abstand von 6 mm zueinander aufweisen. Die Flächenbedeckung beträgt 38%.

Die Querhandeinreißbarkeit wird als "sehr gut" bewertet - die Weiterreißkraft beträgt 10,6 N.

Die Fasereinbindung verbessert sich um 2 bis 3 Noten auf "sehr gut" bei geringfügigen Einbußen bezüglich des textilen Griffs. Gegenüber dem Beispiel 1 wird in Querrichtung eine leichte Erhöhung der Höchstzugfestigkeiten gemessen.

Anwendungstechnische Teste in Form eines beschichteten Klebebandes ergeben analog Beispiel 1 und 2 gute Ergebnisse beim Bandagieren von Elektrokabeln zu Kabelbäumen.

## Patentansprüche

1. Trägermaterial auf Vliesbasis insbesondere für ein Klebeband, wobei auf der Oberfläche eines bandförmigen Trägers auf Vliesbasis ein- oder beidseitig zumindest ein Streifen auf Polymerbasis aufgebracht ist,
**dadurch gekennzeichnet, dass**
der oder die Streifen aus schmalen Linien oder/und aus kettenförmig aneinander gereihten Geometrien wie beispielsweise Rauten, Ellipsen und/oder Kreisen bestehen, wobei als Polymerbasis Bindemittel, Druckfarben, Farben, Lacke in Form von Dispersionen oder Pasten, gelöst in organischen Lösemitteln, als Hotmelts oder auch als reaktive Systeme eingesetzt werden.

2. Trägermaterial nach Anspruch 1, **dadurch gekennzeichnet, dass** eine Vielzahl vorzugsweise parallel angeordneter Streifen auf dem Träger aufgebracht ist.

3. Trägermaterial nach den Ansprüchen 1 und 2, **dadurch gekennzeichnet, dass** die Streifen im wesentlichen in Maschinenrichtung aufgebracht sind.

4. Trägermaterial nach den Ansprüchen 1 bis 3, **dadurch gekennzeichnet, dass** die Streifen durchgängig oder durch Zwischenräume unterbrochen sind, wobei die Abstände zwischen den Elementen kleiner als die Längen der Streifenelemente sind.

5. Trägermaterial nach den Ansprüchen 1 bis 4, **dadurch gekennzeichnet, dass** die Streifen eine Breite von 0,1 mm bis 6 mm, insbesondere von 0,5 mm bis 3 mm, aufweisen.

6. Trägermaterial nach zumindest einem der vorherigen Ansprüche, **dadurch gekennzeichnet, dass** die Summe der Fläche aller Streifen weniger als 50% der Gesamtfläche des Trägers ausmacht, insbesondere 20 bis 40%.

7. Trägermaterial nach zumindest einem der vorherigen Ansprüche, **dadurch gekennzeichnet, dass** Querstreifen auf dem Träger aufgebracht sind, die im wesentlichen rechtwinklig zu den Streifen angeordnet sind.

8. Trägermaterial nach zumindest einem der vorherigen Ansprüche, **dadurch gekennzeichnet, dass** als Vliesmaterial Stapelfaservliese verwendet werden.

9. Trägermaterial nach zumindest einem der vorherigen Ansprüche, **dadurch gekennzeichnet, dass** das Vliesmaterial aus Fasern besteht, die eine Länge im Bereich von 30 bis 100 mm und/oder eine Feinheit von 1 bis 6 dtex aufweisen.

10. Trägermaterial nach zumindest einem der vorherigen Ansprüche, **dadurch gekennzeichnet, dass** die Streifen durch Drucktechnologien wie Rastertief- oder Siebdruck, durch Sprühtechniken wie Ink-Jet, partielles Imprägnieren, druckloses Aufbringen aus einem Gießkopf, Düsenstreifenstrichbeschichtung oder im Rakelauftragsverfahren aufgebracht werden.

11. Trägermaterial nach zumindest einem der vorherigen Ansprüche, **dadurch gekennzeichnet, dass** die Bindemittel, Druckfarben, Farben, Lacke in Form von Dispersionen oder Pasten, gelöst in organischen Lösemitteln, als Hotmelts oder auch als reaktive Systeme als Hauptbestandteile Polyacrylate, Polyvinylacetate, Polyurethane, Polyester, styrolhaltige Copolymere aufweisen.

12. Trägermaterial nach zumindest einem der vorherigen Ansprüche, **dadurch gekennzeichnet, dass** die Polymerbasis mit 1 bis 80 g/m², insbesondere mit 3 bis 20 g/m² auf dem Träger aufgetragen ist.

13. Trägermaterial nach zumindest einem der vorherigen Ansprüche, **dadurch gekennzeichnet, dass** zumindest auf einer Seite des bandförmigen Trägers eine selbstklebende Klebemasse aufgebracht ist.

14. Verwendung eines Trägermaterials nach zumindest einem der vorherigen Ansprüche für ein Klebeband, wobei auf der einen Seite des bandförmigen Trägers Streifen auf Polymerbasis aufgebracht sind und auf der anderen Seite, die der Seite gegenüberliegt, auf der der oder die Streifen auf Polymerbasis vorhanden sind, insbesondere vollflächig eine selbstklebende Klebemasse aufgebracht ist, wobei der oder die Streifen aus schmalen Linien oder/und aus kettenförmig aneinander gereihten Geometrien wie beispielsweise Rauten, Ellipsen und/oder Kreisen bestehen und wobei als Polymerbasis Bindemittel, Druckfarben, Farben, Lacke in Form von Dispersionen oder Pasten, gelöst in organischen Lösemitteln, als Hotmelts oder auch als reaktive Systeme eingesetzt werden.

15. Verwendung eines Trägermaterials nach den Ansprüchen 13 und 14 zum Ummanteln von langgestrecktem Gut, wie insbesondere Kabelsätzen, wobei das Trägermaterial in einer spiralförmigen Bewegung um das langgestreckte Gut geführt wird.

## Claims

1. Nonwoven-based backing material especially for adhesive tape, comprising a tape-shaped nonwoven-based backing having at least one polymer-base stripe surficially applied to it on either or both of its sides, **characterized in that** said stripe or stripes comprise narrow lines or/and concatenated geometries such as for example rhombuses, ellipses and/or circles, the polymer base used comprising binders, inks, including printing inks, coatings in the form of dispersions or pastes dissolved in organic solvents, as hotmelts or else as reactive systems.

2. Backing material according to claim 1, **characterized in that** said backing supports a multiplicity of stripes preferably applied in a parallel arrangement.

3. Backing material according to either of Claims 1 and 2, **characterized in that** said stripes are applied substantially in the machine direction.

4. Backing material according to any of Claims 1 to 3, **characterized in that** said stripes are continuous or interrupted by separations, the distances between the elements being smaller than the lengths of the stripe elements.

5. Backing material according to any of Claims 1 to 4, **characterized in that** said stripes are from 0.1 mm to 6 mm and especially from 0.5 mm to 3 mm in width.

6. Backing material according to at least one of the preceding claims, **characterized in that** the total area of all stripes comprises less than 50% of the total area of said backing, especially from 20 to 40%.

7. Backing material according to at least one of the preceding claims, **characterized in that** cross-stripes have been applied to said backing at substantially right angles to said stripes.

8. Backing material according to at least one of the preceding claims, **characterized in that** the nonwoven material used is staple fiber web.

9. Backing material according to at least one of the preceding claims, **characterized in that** said nonwoven material comprises fibers from 30 to 100 mm in length and/or from 1 to 6 dtex in linear density.

10. Backing material according to at least one of the preceding claims, **characterized in that** said stripes are applied by printing technologies such as photogravure or screen printing, by spraying techniques such as inkjet, partial impregnating, pressureless application from a casting head, jet stripe spread coating or knife coating.

11. Backing material according to at least one of the preceding claims, **characterized in that** said binders, inks, including printing inks, coatings in the form of dispersions or pastes dissolved in organic solvents, as hotmelts or else as reactive systems have, as main constituents, polyacrylates, polyvinyl acetates, polyurethanes, polyesters, styrenic copolymers.

12. Backing material according to at least one of the preceding claims, **characterized in that** said polymer base is applied to said backing at from 1 to 80 g/m² and especially at from 3 to 20 g/m².

13. Backing material according to at least one of the preceding claims, **characterized in that** a self-adhesive composition has been applied to at least one side of said tape-shaped backing.

14. Use of a backing material according to at least one of the preceding claims for an adhesive tape, wherein polymer-base stripes have been applied to one side of said tape-shaped backing and a self-adhesive composition has been applied, especially uniformly, to the other side, the side opposite the side with said polymer-base stripe or stripes, said stripe or stripes comprising narrow lines or/and concatenated geometries such as for example rhombuses, ellipses and/or circles and the polymer base used comprising binders, inks, including printing inks, coatings in the form of dispersions or pastes dissolved in organic solvents, as hotmelts or else as reactive systems.

15. Use of a backing material according to either of Claims 13 and 14 for wrapping elongate material, such as in particular cable trunks, which comprises said backing material being routed spirally around said elongate material.

## Revendications

1. Matériau support à base d'un non-tissé, en particulier pour un ruban adhésif, au moins une bande à base de polymère étant appliquée sur la surface d'un support en forme de ruban à base d'un non-tissé, sur une face ou les deux faces, **caractérisé en ce que** la ou les bandes sont constituées de lignes étroites et/ou de géométries assemblées les unes aux autres en forme de chaîne, comme par exemple des losanges, des ellipses et/ou des cercles, en utilisant comme base de polymère des liants, des encres d'imprimerie, des peintures, des laques sous forme de dispersions ou de pâtes, dissoute dans des solvants organiques, sous forme de masses thermofusibles et également sous forme de systèmes réactifs.

2. Matériau support selon la revendication 1, **caractérisé en ce qu'**une multitude de bandes, de préférence disposées parallèlement, est appliquée sur le support.

3. Matériau support selon les revendications 1 et 2, **caractérisé en ce que** les bandes sont appliquées essentiellement dans le sens machine.

4. Matériau support selon les revendications 1 à 3, **caractérisé en ce que** les bandes sont continues ou interrompues par des espaces intermédiaires, les distances entre les éléments étant plus petites que les longueurs des éléments en forme de bande.

5. Matériau support selon les revendications 1 à 4, **caractérisé en ce que** les bandes présentent une largeur de 0,1 mm à 6 mm, en particulier de 0,5 mm à 3 mm.

6. Matériau support selon au moins l'une quelconque des revendications précédentes, **caractérisé en ce que** la somme des surfaces de toutes les bandes représente moins de 50% de la surface totale du support, en particulier 20 à 40%.

7. Matériau support selon au moins l'une quelconque des revendications précédentes, **caractérisé en ce que** des bandes transversales sont appliquées sur le support, qui sont disposées de manière sensiblement perpendiculaire aux bandes.

8. Matériau support selon au moins l'une quelconque des revendications précédentes, **caractérisé en ce qu'**on utilise comme matériau en non-tissé des non-tissés en fibres discontinues.

9. Matériau support selon au moins l'une quelconque des revendications précédentes, **caractérisé en ce que** le matériau en non-tissé est en fibres qui présentent une longueur dans la plage de 30 à 100 mm et/ou une finesse de 1 à 6 dtex.

10. Matériau support selon au moins l'une quelconque des revendications précédentes, **caractérisé en ce que** les bandes sont appliquées par des technologies d'impression, comme l'impression matricielle ou la sérigraphie, par des techniques de pulvérisation, telles que le jet d'encre, l'imprégnation partielle, l'application sans pression à partir d'une tête de dépose, par revêtement par des bandes de buses ou par un procédé d'application à la racle.

11. Matériau support selon au moins l'une quelconque des revendications précédentes, **caractérisé en ce que** les liants, les encres d'imprimerie, les peintures, les laques se trouvant sous forme de dispersions ou de pâtes, dissoute dans des solvants organiques, sous forme de masses thermofusibles ou également de systèmes réactifs, contiennent comme constituants principaux des polyacrylates, des poly(acétates de vinyle), des polyuréthanes, des polyesters, des copolymères contenant du styrène.

12. Matériau support selon au moins l'une quelconque des revendications précédentes, **caractérisé en ce que** la base de polymère est appliquée sur le support à raison de 1 à 80 g/m², en particulier de 3 à 20 g/m².

13. Matériau support selon au moins l'une quelconque des revendications précédentes, **caractérisé en ce qu'**une masse autoadhésive est appliquée sur au moins une face du support en forme de ruban.

14. Utilisation d'un matériau support selon au moins l'une quelconque des revendications précédentes pour un ruban adhésif, des bandes à base de polymère étant appliquées sur une face du support en forme de ruban et une masse autoadhésive étant appliquée sur l'autre face, opposée à la face sur laquelle se trouve la ou les bandes à base de polymère, de préférence sur toute la surface, la ou les bandes étant constituées de lignes étroites ou de géométries assemblées les unes aux autres en forme de chaîne, telles que par exemple des losanges, des ellipses et/ou des cercles et en utilisant, comme base de polymère, des liants, des encres d'imprimerie, des peintures, des laques sous forme de dispersions ou de pâtes, dissoute dans des solvants organiques, sous forme de masses thermofusibles ou également de systèmes réactifs.

15. Utilisation d'un matériau support selon les revendications 13 et 14 pour enrober un produit allongé, tel qu'en particulier des jeux de câbles, le matériau support étant guidé par un mouvement en spirale autour du produit allongé.
